(19) 

Europäisches
Patentamt
European
Patent Office
Office européen
des brevets

(11) **EP 2 092 836 A1**

(12) **EUROPEAN PATENT APPLICATION**
published in accordance with Art. 153(4) EPC

(43) Date of publication:
26.08.2009 Bulletin 2009/35

(51) Int Cl.:
*A23L 1/212* (2006.01)  *A23B 7/02* (2006.01)

(21) Application number: 07832162.7

(22) Date of filing: 20.11.2007

(86) International application number:
PCT/JP2007/072432

(87) International publication number:
WO 2008/062776 (29.05.2008 Gazette 2008/22)

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 24.11.2006  JP 2006317247
11.05.2007  JP 2007127329

(71) Applicant: Kabushiki Kaisha Hayashibara
Seibutsu
Kagaku Kenkyujo
Okayama-shi
Okayama 700-0907 (JP)

(72) Inventors:
• KATAGIRI, Naohiko
Okayama-shi
Okayama 700-0907 (JP)

• SAITO, Noriyuki
Okayama-shi
Okayama 700-0907 (JP)
• SOGAWA, Takanao
Okayama-shi
Okayama 700-0907 (JP)
• MIYAKE, Toshio
Okayama-shi
Okayama 700-0907 (JP)

(74) Representative: Daniels, Jeffrey Nicholas
Page White & Farrer
Bedford House
John Street
London WC1N 2BF (GB)

(54) **SUGAR-CONTAINING DRIED VEGETABLE, METHOD FOR PRODUCING THE SAME AND USE THEREOF**

(57) An object of the present invention is to provide a dried vegetable comprising saccharide, which shows preferable rehydrating property and good shape, color, and relish when rehydrating it and can be used as a material of instant foods and side dishes, a process for producing the dried vegetable, and uses thereof. The above object is attained by providing a dried vegetable comprising saccharide, which is obtained by permeating a saccharide (s) into a vegetable and drying with hot air, and said dried vegetable comprising saccharide shows following physical properties of (1) and (2):
(1) The dry weight of residue which is obtained by extracting said dried vegetable comprising saccharide with 60% ethanol aqueous solution accounts for 15% or higher but lower than 35% to the weight of said dried vegetable comprising saccharide; and
(2) The specific gravity of said dried vegetable comprising saccharide is increased by 0.1 or higher from that of a dried vegetable prepared without permeating the saccharide(s), and is higher than 1.0 but lower than 1.5;
and a process for producing the dried vegetable, and uses thereof.

EP 2 092 836 A1

**Description**

## TECHNICAL FIELD

The present invention relates to a dried vegetable comprising saccharide and its preparation and use, particularly, to a dried vegetable comprising saccharide, obtained by subjecting a vegetable to saccharide-permeating treatment followed by hot-air drying, which satisfies the following physical properties 1) and 2) and has excellent property in hot-water rehydration and good shape, color and relish in the vegetable rehydrated with hot water, and to its preparation and use.

1) The dry weight of the residue obtained by extracting the dried vegetable comprising saccharide with 60 (v/v) % ethanol aqueous solution (hereinafter abbreviated as "60% ethanol") accounts for 15% or higher but lower than 35% to the weight of the dried vegetable comprising saccharide.

2) The specific gravity of the dried vegetable comprising saccharide is increased by 0.1 or higher from that of a dried vegetable without saccharide-permeating treatment, and is higher than 1.0 but lower than 1.5.

## BACKGROUND ART

Dried vegetables are widely used for ingredients in instant foods and snack foods although the consumption of them are relatively lower than that of fresh vegetables or frozen vegetables. Usually, dried vegetables are prepared by subjecting sliced or chipped vegetables to drying treatment such as hot-air drying or freeze drying. However, dried vegetables prepared by hot-air drying alone are inferior in hot-water rehydrating property and have defects of discoloring, color degradation or browning in drying treatment. Additionally, when rehydrated with hot water, the vegetables have deteriorated color much different from the natural color of the vegetables and deteriorated relish. On the other hand, freeze-dried vegetables are excellent in hot-water rehydrating property and the discoloration, color degradation or browning in drying treatment are kept at a minimum. However, they have defects of high cost due to the increased energy required for drying treatment and of deterioration of relish including texture and restorability of their shape.

In recent years, preparations of dried vegetables using saccharides are proposed. For example, Japanese Patent No. 3008188 proposed a dried plant body in which 20% or higher, preferably, 50% or higher, more preferably, 70% or higher of water in the fresh plant is replaced with trehalose, which is excellent in preservation stability and morphological stability. Japanese Patent *Kokai* No.50817/2000 proposed a cooking method without frying, in which raw vegetables are heated and rehydrated using trehalose solution at high concentration. These related arts propose that methods for providing dried foods such as fruit or vegetable chips by soaking the materials in trehalose solution before drying to improve color and texture of the dried foods. However, it was found that the dried vegetables comprising saccharide obtained by the above methods have too hard texture, low tastes and flavors diluted by the saccharides, and a risk of change in their physical property caused by crystallization or separation of the saccharide during storage. It was also found that these vegetable chips comprising large amounts of saccharides are hard to be dried, and their preparation require long-time drying and increased energy and is difficult in continuously drying and power saving.

In addition to the above related arts, Japanese Patent No. 3817602 discloses dried fruits or vegetables without frying, having a replacement rate of trehalose of 1 to 20%, rupture strength of 300 to 2,000 g and specific gravity of one or less. However, the application of these dried fruits and vegetables without frying, which were prepared by soaking in an alkaline solution containing saccharides before drying, is restricted because they were developed for a particular use for enjoying crunchy texture when eaten as mixture with cornflakes or cereals.

Under the above circumstances, it is desired to establish a high-quality dried vegetable, which can be preferably used as an ingredient in instant foods or material for prepared foods and has excellent property in hot-water rehydrating and good shape, color and relish in the vegetable rehydrated with hot water, and its preparation method and use.

## DISCLOSURE OF INVENTION

The first object of the present invention is to provide an high-quality dried vegetable, which has an excellent property in hot-water rehydrating and a good shape, color and relish in the rehydrated vegetable, is useful as an ingredient for instant foods or retort foods, or a material for side dishes, and is easy to be prepared. The second object of the present invention is to provide a process for producing a dried vegetable, which can be carried out in a continuous or power-saving method. The third object of the present invention is to provide an application of the dried vegetable.

The inventors of the present invention were dedicated to investigating a preparation of a dried vegetable comprising saccharide, in which the vegetable was permeated with a saccharide before being dried, to obtain a easily-preparable and high-quality dried vegetable which has an excellent property in hot-water rehydrating and a good shape, color and relish in the rehydrated vegetable, focusing attention on use of saccharides, preferably, $\alpha,\alpha$-trehalose (hereinafter described as "trehalose" unless otherwise noted) and saccharide derivatives of trehalose. Consequently, the inventors found that a dried vegetable comprising saccharide, satisfying the following properties 1) and 2), which is obtained by a process of washing, cutting, blanching, soaking in saccharide solution, draining off and then drying, has excellent property in hot-water rehydrating and a good shape, color and relish in the rehydrated vegetable. They also found that the dried vegetable is lowly hygroscopic and highly stable in preservation, and that it is easy to make its production process continuous or power-saving one.

1) The dry weight of the residue obtained by extracting the dried vegetable comprising saccharide with 60% ethanol accounts for 15% or higher but lower than 35% of the weight of the dried vegetable comprising saccharide.
2) The specific gravity of the dried vegetable comprising saccharide is increased by 0.1 or higher from that of a dried vegetable without saccharide-permeating treatment and is higher than 1.0 but lower than 1.5.

It was found that since the amount of the saccharide permeated into the dried vegetable comprising saccharide prepared by the process of the present invention is relatively low, the vegetable can be easily produced in continuous or power-saving method because it can be quickly dried, resulting in hygienic production of a high-quality and stable dried vegetable comprising saccharide in a large scale.

The present invention attains the first object described above by providing a dried vegetable comprising saccharide, obtained by permeating a saccharide therein before drying, which satisfy the following physical properties 1) and 2).

1) The dry weight of the residue obtained by extracting the dried vegetable comprising saccharide with 60% ethanol accounts for 15% or higher but lower than 35% of the weight of the dried vegetable comprising saccharide.
2) The specific gravity of the dried vegetable comprising saccharide increases by 0.1 or higher from that of a dried vegetable without saccharide-permeating treatment, and is higher than 1.0 but lower than 1.5.

The present invention also attains the second object described above by providing a method for preparing the above dried vegetable comprising saccharide, comprising the steps a) to d) described bellow:

a) blanching a material vegetable;
b) permeating a saccharide into the blanched vegetable by soaking the blanched vegetable into an aqueous solution comprising the saccharide;
c) draining off the vegetable permeated with the saccharide; and
d) drying the vegetable permeated with the saccharide in a hot air.

The present invention also attains the third obj ect described above by providing various kinds of instant foods such as instant "*miso*" soups, instant Chinese noodles, instant fried noodles and instant "*ohira*" (a cooked side dish in Japanese-style) using the dried vegetable comprising saccharide as an ingredient, material of side dishes and secondary fabricated foods, by providing a high-quality dried vegetable comprising saccharide which has excellent property in hot-water rehydrating, has a good shape, color and relish in the rehydrated vegetable, and is lowly hygroscopic and highly stable in preservation.

According to the present invention, a high-quality dried vegetable comprising saccharide which has excellent property in hot-water rehydrating, has a good shape, color and relish in the rehydrated vegetable, and is lowly hygroscopic and highly stable in preservation can be provided. The dried vegetable can be used for an ingredient of various kinds of instant foods, material of side dishes and secondary fabricated foods.

## BEST MODE FOR CARRYING OUT THE INVENTION

The dried vegetable comprising saccharide as referred to as in the present invention means a dried vegetable comprising saccharide satisfying the physical properties 1) and 2) described bellow:

1) The dry weight of the residue obtained by extracting the dried vegetable comprising saccharide with 60% ethanol accounts for 15% or higher but lower than 35% of the weight of the dried vegetable comprising saccharide; and
2) The specific gravity of the dried vegetable comprising saccharide is increased by 0.1 or higher from that of a dried vegetable without saccharide-permeating treatment, and is higher than 1.0 but lower than 1.5.
The dried vegetable comprising saccharide of the present invention can be obtained by washing the material vegetable in conventional means, which may be followed by chipped by slicing, cutting or crushing if necessary, blanching, permeating with a saccharide by soaking in a saccharide aqueous solution, draining, and then drying.

# EP 2 092 836 A1

"The dry weight of the residue obtained by extracting the dried vegetable comprising saccharide with 60% ethanol accounts for 15% or higher but lower than 35% of the weight of the dried vegetable comprising saccharide", the physical property 1) described above, means that 65% or higher but lower than 85% of the dried vegetable comprising saccharide of the present invention is 60%-ethanol soluble substances which are extracted with 60% ethanol. The 60%-ethanol soluble substances include the saccharide permeated by saccharide-permeating treatment. A dried vegetable comprising saccharide with lower than 15% of the dry weight of a residue after 60% ethanol extraction has defects of having hard texture, being easy to separate out of the saccharide crystal or whiten, and having deteriorated relish of the vegetable rehydrated with hot water because of excess amount of the saccharide, although it has excellent property in hot-water rehydrating. A dried vegetable comprising saccharide with 35% or higher of the dry weight of a residue after 60% ethanol extraction has insufficient hot-water rehydrating property, color and relish, and tends to deteriorate with time because of deficient amount of the saccharide. When a dried vegetable is prepared by the same method described above without saccharide-permeating treatment, its dry weight of the residue obtained by 60% ethanol extraction treatment accounts for usually 40% or higher.

"The specific gravity of the dried vegetable comprising saccharide is increased by 0.1 or higher from that of a dried vegetable without saccharide-permeating treatment, and is higher than 1.0 but lower than 1.5", the physical property 2) described above, means that a dried vegetable comprising saccharide of the present invention gives a specific gravity increased by 0.1 or higher than that of a dried vegetable prepared without saccharide-permeating treatment and the specific gravity is in a range of higher than 1.0 to lower than 1.5, for example, when the specific gravity was determined according to the measurement method described in "Shokuhin Tenkabutsu Kotei-sho Kaisetsu-sho", 6th edition, Hirokawa Shoten, 1992, and that a dried vegetable comprising saccharide of the present invention was permeated with a saccharide to give a specific gravity in the range describedabove. A dried vegetable comprising saccharide with a increased specific gravity by lower than 0.1 compared with a dried vegetable without saccharide-permeating treatment or with the specific gravity is 1 or lower has defects of having insufficient hot-water rehydration, tending to have deteriorated color and relish caused by discoloring and to be fragile and disintegrate, and having deteriorated color and relish of the rehydrated vegetable because of deficient amount of the saccharide. A dried vegetable comprising saccharide with the specific gravity is 1.5 or higher has defects of requiring long-time drying or resulting in insufficient drying in manufacturing and risks of excessively sweetening other ingredients in food in using because of excess amount of the saccharide.

The kind of material vegetables used in the present invention is not restricted and the vegetable can be used alone or in any combination. Following vegetables are quoted for the present invention: Leaf vegetables such as lettuce, witloof, Chinese cabbage, cabbage, Welsh onion, chive, kale, mulukhiya, "*ashitaba*", spinach, "*komatsuna*", "*nozawana*", crown daisy, pak-choi, sprout, bud of "*tara*", young tea leaves, leaf bud and perilla leaves; root vegetables such as carrot, lotus root, onion, garlic, burdock, radish, aroid, Japanese yam, sweet potato, potato and ginger; flower or fruit vegetables such as zingiber mioga, angled loofah, cauliflower, broccoli, eggplant, tomato, cucumber, pumpkin, zucchini, green pepper, paprika, podded pea, snap bean, green soybean and sweet corn; fungi such as shiitake mushroom, "*nameko*" and "*shimeji*"; and seaweeds such as "*hijiki*", brown seaweed and sea tangle. When leaf vegetables are used, they are desired to cut into usually 3 to 50 mm, preferably, 5 to 30 mm in length. When root vegetables are used, they are desired to cut into usually 1 to 10 mm, preferably, 3 to 8 mm in thickness. When flower or fruit vegetables are used, they are desired to cut into length or thickness according to leaf or root vegetables if necessary.

The saccharides permeated in the vegetables of the present invention are not restricted. The following saccharides can be quoted: Reducing saccharides such as glucose, fructose, maltose, isomaltose, lactose, palatinose, lactosucrose, maltotriose, maltotetraose and maltooligosaccharides; non-reducing saccharides such as trehalose, saccharide derivatives of trehalose, neotrehalose and lactoneotrehalose; cyclic oligosaccharides such as cyclodextrins, in which 6 to 8 glucose molecules are bound in cyclic structure by $\alpha$-1,4 linkage, and cyclic tetrasaccharide, in which 4 glucose molecules are bound alternately by $\alpha$-1,3 linkage and $\alpha$-1,6 linkage; sugar alcohols such as erythrytol, sorbitol, maltitol, isomaltitol, lactitol and palatinit. Since monosaccharides such as glucose and fructose among the above saccharides tend to give browning with their strong reducing power, it is necessary to decrease their content as far as possible, for example, by admixing low reducing saccharides, preferably, to make the saccharide having dextrose equivalent (hereinafter abbreviated as "DE") of 60 or lower. Although maltooligosaccharides with glucose polymerization degree of 6 or higher and cyclodextrins have low reducing power, they are unfavorable because of their so large molecular mass as to be hard to permeate into vegetables. Particularly, trehalose and its saccharide derivatives among the above saccharides are suitable non-reducing saccharides for the present invention and advantageously used because they are tolerant of heat and acid, are hard to give browning when processed with vegetables containing large amount of amino acids and keep the natural colors of the material vegetables. Also the resulting dried vegetables comprising saccharide have characteristics such as low hygroscopicity and low deterioration with time.

Trehalose used in the present invention is not restricted to its source and preparation and hydrous or anhydrous crystal of trehalose, for example, prepared by the method described in Japanese Patent *Kokai* No. 170977/1995 or Japanese Patent *Kokai* No.213283/1995 canbe arbitrarily used. Concretely, high-purity hydrous crystalline trehalose ("TREHA®" commercialized by Hayashibara Shoji Inc., Okayama, Japan) is advantageously used.

The saccaride derivatives of trehalose as referred to as in the present invention means one or more saccarides selected from non-reducing saccarides having trehalose structure in their molecule with glucose polymerization degree of 3 or higher. Concretely, glucosyltrehalose, maltosyltrehalose and maltotriosyltrehalose are quoted, in which one glucose residue of trehalose binds to glucose, maltose and maltotriose, respectively. Also saccharides with DE 60 or lower containing one or more saccarides selected from reducing saccarides, non-reducing saccarides, cyclic oligosaccharides and sugar alcohols described above together with trehalose and/or its saccharide derivatives are advantageously used for the present invention. Among commercial products, for example, maltosyltrehalose-containing syrup ("HALLODEX®" commercialized by Hayashibara Shoji Inc., Okayama, Japan), which containing 50% or higher of maltosyltrehalose with glucose polymerization degree of 4 and other saccharides such as glucose, maltose, maltotriose and maltotetraose, is advantageously used.

As the preparation method of the dried vegetables comprising saccharide of the present invention, methods comprising the following steps a) to d) is suitable, particularly, as treatment method for treating vegetables containing starchy saccharides:

a) blanching a material vegetable;
b) permeating a saccharide into the blanched vegetable by soaking the blanched vegetable into an aqueous solution comprising the saccharide;
c) draining off the vegetable permeated with the saccharide; and
d) drying the vegetable permeated with the saccharide. For the present invention, a preparation method in which the saccharide-permeating step is accelerated by giving a temperature difference between the blanching step and the saccharide-permeating step which is carried out in lower temperature than that of the blanching treatment are advantageously used.

In the preparation of the dried vegetables comprising saccharide of the present invention, the material vegetables are washed in conventional means, chipped by slicing, cutting or crushing if necessary, and subjected to blanching treatment, preferably with aqueous heating medium. The blanching treatment with aqueous heating medium means a heat treatment with aqueous heating medium such as hot water and heating steam as pretreatment of fresh vegetables in processing, and usually the fresh vegetables are soaked in hot water in a relatively short time. The purposes of the blanching treatment of the present invention are 1) to unstiffen the tissue of the vegetables particularly to gelatinize starchy saccarides contained in the vegetables for acceleration of the successive saccaride-permeating step; 2) to prevent browning by inactivating enzymes including polyphenoloxidase; and 3) to sterilize the vegetables. The blanching treatment in the preparation of the dried vegetables comprising saccharide of the present invention is carried out at a temperature of, usually, 90°C or higher, preferably, 95°C or higher, for 10 seconds to 20 minutes, preferably, 30 seconds to 10 minutes, although it varies according to the kind of the vegetable.

The saccharide permeating step in which vegetables are soaked in a saccharide solution of a lower temperature than that of the blanching treatment as referred to as in the present invention means the process of soaking the vegetable just after blanched in the saccharide solution of a lower temperature than that of the vegetable to permeate the saccharide into the vegetable as fast as possible. The temperature of saccaride-permeating treatment to permeate the saccaride into vegetable as fast as possible is lower than that of the blanching treatment, preferably by 5°C or over, more preferably, by 10°C or over, and is usually 40°C or higher, preferably 45°C or higher, although it varies according to the kind of the vegetable. Particularly, when using vegetables containing starch, since the saccaride-permeation is inhibited by the starch in the vegetables at a lower temperature than the temperature for the starch gelatinization, a suitable temperature is that sufficient to keep the starch gelatinized, preferably, 50°C or higher, more preferably, 55°C or higher. The soaking time for saccaride-permeating treatment is usually 2 to 30 minutes, more preferably, 5 to 20 minutes, although it varies according to the concentration of the saccaride solution or the treatment temperature. The saccaride-permeating treatment is usually carried out under normal pressure, and the treatment under reduced or increased pressure can be carried out for faster or more homogeneous permeation of the saccaride into the vegetable.

The concentration of the saccaride solution used in the present invention is not restricted as long as the saccaride is permeated into the vegetable tomake the intended dried vegetables comprising saccaride, and is, usually, 7.5 to 25%, preferably, 10 to 20%, on a dry solid basis. When a saccaride solution at the concentration of 7.5% or lower is used, the amount of the saccaride permeating into the vegetable is insufficient even if it has come to equilibrium, in other words, the dry weight of the residue after extracting with 60% (v/v) ethanol aqueous solution accounts for 35% or higher of the dried vegetable comprising saccaride. It results in deterioration of hot-water rehydration, insufficient effect of preserving good color and relish, and risks of being more fragile. When a saccaride solution at the concentration of higher than 25% is used to permeate the saccaride to into the vegetable up to equilibrium, the saccaride is hard to permeate into the vegetable and the amount of saccaride adhering on the surface of the vegetable increases because of the excess concentration of the saccaride, and the resultant vegetable is hard to be dried, in other words, the dry weight of the residue after extracting with 60% (v/v) ethanol aqueous solution accounts for lower than 15% of the dried vegetable comprising saccharide. It results in defects of hardening of the resultant dried vegetable and separating out of the saccharide crystal or whitening.

The draining step as referred to as in the present invention means the process to remove excess saccharide solution on the surface of the saccharide-permeated vegetable and usually carried out using centrifugal equipped with basket or spin-dryer for foods in an ambient temperature. When small amount of vegetable is used, the process can be arbitrarily carried out by standing in strainer.

The drying step as referred to as in the present invention means the process to dry the vegetable subjected to the draining process described above to make a dried vegetable comprising saccharide, which is the final process. The method for drying the vegetable by hot air is arbitrarily selected from through circulation drying, through circulation drying with heating or infrared-radiation drying. The drying process is carried out at a temperature of 50°C or higher, preferably, 60°C or higher but lower than 90°C, for 10 to 24 hours, although it varies according to the kind or shape of the vegetable.

In the present invention, it was found that the vegetable comprising saccharide, subjected to the draining treatment described above, is relatively easy to be dried, because they were moderately transformed and hard to adhere to each other and in drying. Therefore, it was found that when a continuous method, which comprises the draining step using a spin-dryer and the successive hot-air drying step using a multiunit belt conveyer system to move the vegetable with reversing, is adopted, it take shorter time for drying, preferably, 0.5 to 3 hours, resulting in efficient preparation of a high-quality dried vegetable comprising saccharide. By combinationaly use of a method using vibration energy and thermal energy such as pulse-drying method in addition to the above method, the dried vegetable comprising saccharide can be advantageously prepared in shorter time.

Accordingly, in the preparation of the dried vegetable comprising saccharide of the present invention, any of the following method is usable; a method in which every steps of washing a material vegetable, cutting or chipping, blanching, permeating saccharide, draining and drying are carried out by batch-wise and a method in which parts of or all of the above steps are carried out in continuous method. Particularly, drying equipment for vegetable, for example, a ventilated 3-step band dryer, produced by Kumeta Seisakusho, Shizuoka, Japan, can be advantageously used.

In the draining step and drying step of the vegetable after saccharide-permeating treatment described above, the volume of resultant dried vegetable comprising saccharide become smaller by comprising additional steps of lightly kneading or twisting the saccharide-permeated vegetable, resulting in advantageously reducing transportation cost because of the reduced volume of packaging container.

Since the dried vegetable comprising saccharide of the present invention has excellent property in hot-water rehydrating, preserve a good shape color and relish in the rehydrated vegetable, and is lowly hygroscopic and stable in storage, it is advantageously used as an ingredient in soup, "*miso*" soup and noodles, which are eaten after rehydrated with hot water, as a material for processed foods such as "*Ohira*" (a kind of Japanese cooked food), which are eaten after rehydrated by seasoned soup, as an ingredient in retort-pouch foods, and a material of confectionery or bakery product. It also can be eaten per se as a snack food.

The dried vegetables comprising saccharide and their preparations of the present invention are explained by the following experiments.

Through the experimets, the percentage of the drying weight of the residue after treating the dried vegetable comprising saccharide with 60% ethanol to the weight of the dried vegetable comprising saccharide was measured by the following method, to evaluate the amount of the saccharide permeated into the vegetable in saccharide-permeating step, in other words, the amount of the saccharide contained into the dried vegetable comprising saccharide. A dried vegetable prepared by the same method without saccharide-permeating process was used as control.

(1) Weight of dried vegetable (A)

As the samples, dried vegetables with saccharide-permeating treatment and without saccharide-permeating treatment (control) were used. Each was dried at 80°C for 5 hours with a homeothermal blowing dryer equipped with shelf ("FC-612", commercialized by Toyo Manufacturing Co., Ltd., Kagawa, Japan) to standardize the drying condition, cooled down to an ambient temperature, pulverized with a bench pulverizer, and then about 6 grams of each powder was weighed out.

(2) Weight of residue after 60% ethanol extraction (B)

Each powder weighed out in (1) described above was admixed with 100 ml of deionized water and stirred at an ambient temperature for 1 hour. The suspension was admixed with ethanol to give a final concentration of 60% (v/v), stirred at an ambient temperature for additional 1 hour to extract 60%-ethanol soluble substances. The residue of the extract was filtered, rinsed with adequate amount of 60% ethanol, and then the wet residue was preliminary dried at 55°C for 16 hours. The residue was additionally dried in the same condition as described in (1), i.e. at 80°C for 5 hours and then precisely weighed.

(3) Using the data obtained by the methods described above, the percentage of the weight (B) of the residue of the dried vegetable of the present invention obtained by 60%-ethanol extraction to the weight (A) of the dried vegetable weighed in (1) was obtained by calculating (B/A) × 100.

The dried vegetables comprising saccharide were evaluated on (a) hot-water rehydrating property, and (b) shape, (c) color and (d) relish of the vegetable rehydrated with hot water. Additionally, the hygroscopicity of the obtained dried vegetable comprising saccharide was evaluated.

The evaluation item (a), hot-water rehydrating property, was determined by measuring the amount of water absorbed in 1 g of the solid content of the vegetable part of the dried vegetable comprising saccharide, assuming that the weight of the vegetable part is equal to the dry weight of the dried vegetable without saccharide-permeating treatment. After at 80°C for 5 hours as described in (1) to standardize the drying condition and cooled at an ambient temperature, 2 g of the dried vegetable comprising saccharide was weighed out, allowed to absorb water by being soaked in 500 ml of hot water at a temperature of 80°C for 10 minutes, drained with paper towel, and then the amount of water absorption was calculated using the following equation.

$$\text{Amount of water (ml/g)} = \{(\text{weight of dried vegetable comprising saccharide rehydrated with hot water}) - (\text{weight of dried vegetable comprising saccharide})\} / (\text{weight of dried vegetable without saccharide-permeating treatment})$$

The sensory evaluation items (b) shape, (c) color and (d) relish were evaluated by a panel test, in which each item was evaluated by 12 panelists on 5-point scale (the standard was set as score 3 points and added or subtracted by 1 or 2 points according to the evaluation), the scores of the 12 panelists were summated, and then the average score per one panelist was obtained as evaluation result on each item.

(b) Evaluation of shape

Shape of the dried vegetable comprising saccharide *per se* or rehydrated with hot water by the method described in (a) was evaluated by megascopic observation. The shape of the dried vegetable without saccharide-permeating treatment is used as standard (3 points). Points were added when the shape before saccharide-permeating treatment was almost kept after saccharide-permeating treatment compared to the standard, and points were subtracted when the shape was significantly constricted, changed or disrupted.

(c) Evaluation of color

Color of the dried vegetable comprising saccharide per se or rehydrated with hot water by the method described in (a) was evaluated by megascopic observation. The color of the dried vegetable without saccharide-permeating treatment is used as standard (3 points). Points were added when the color became bright after the saccharide-permeating treatment compared to the standard, and points were subtracted when the color was deteriorated by discoloration, color loss or browning.

(d) Evaluation of relish

Relish including eating quality of the dried vegetable comprising saccharide per se or rehydrated with hot water by the method described in (a), was evaluated. The relish of the dried vegetable without saccharide-permeating treatment is used as standard (3 points). Points were added when the natural relish was kept after the saccharide-permeating treatment compared to the standard, and points were subtracted when the natural relish was altered or deteriorated.

(e) Evaluation of hygroscopicity

After dried at 80°C for 5 hours as described in (1) to standardize the drying condition and cooled down to an ambient temperature, about 5 g of the dried vegetable comprising saccharide was weighed out and stand at 25°C at 75% relative humidity for 2 weeks. The hygroscopicity was evaluated on the percentage of the increased weight of the dried vegetable comprising saccharide to its initial weight.

Experiment 1

Effect of a saccharide(s) used for the saccharide-permeating treatment on a quality of dried vegetable comprising saccharide (Case of a leaf vegetable)

Effect of a saccharide(s) used for the saccharide-permeating treatment on a quality of dried vegetable comprising saccharide in a production of the dried vegetable was investigated as follows: Commercially available cabbages were rinsed in water and then cut into square of about 10 mm on a side. The resulting cut cabbage was divided into 300 g each and then blanched in 4,000 g of hot water at 95°C for 5 min. Successively, each group of the blanched cut cabbage was permeated with a saccharide (s) by soaking into 1,000 g of various saccharide solutions with a concentration of 15% (w/w) at 80°C for 10 min. After the treatment, the cut cabbage was drained off and spread on a tray and dried at 55°C for 24 hours using "FC-612", a homeothermal blowing dryer equipped with shelf, commercialized by Toyo Manufacturing Co., Ltd., Kagawa, Japan, to make into a dried cabbage comprising saccharide. Then, the dried dried cabbage comprising saccharide was packed in an aluminum-polyethylene laminated bag and preserved in an ambient temperature. Seven kinds of saccharide, i.e., reagent grade glucose, reagent grade maltose, trehalose ("TREHA®", commercialized by Hayashibara Shoji Inc., Okayama, Japan), a saccharide composition comprising maltosyltrehalose ("HALLODEX®", commercialized by Hayashibara Shoji Inc., Okayama, Japan), maltitol, maltohexaose and α-cyclodextrin were used. A dried cabbage prepared by the same method without the saccharide-permeating treatment was used as a control. The percentage of the dry weight of residue obtained by extracting the dried cabbage comprising saccharide with 60% ethanol to the weight of the dried cabbage comprising saccharide, of each cabbage group was measured. Further, aforesaid evaluation items, i.e., (a) rehydrating property (the amount of absorbed water); (b) shape; (c) color; and (d) relish; of the resulting dried cabbage were investigated. Also aforesaid evaluation items, i.e., (b) shape; (c) color; and (d) relish; of the cabbage rehydrated withy hot water were investigated. The results of measuring the percentage of the dry weight of residue obtained by extracting the dried cabbage comprising saccharide with 60% ethanol to the weight of the dried cabbage comprising saccharide are in Table 1. The results of investigating about the evaluation items are in Table 2.

Table 1

| No. | Dried cabbage comprising saccharide | The weight of test sample (g) (A) | The weight of residue after extraction (g) (B) | (B/A) × 100 (%) |
|---|---|---|---|---|
| 1 | Control (No treatment*) | 6.06 | 2.94 | 48.5 |
| 2 | Glucose | 6.14 | 1.55 | 25.2 |
| 3 | Maltose | 6.05 | 1.60 | 26.4 |
| 4 | Trehalose | 6.01 | 1.64 | 27.3 |
| 5 | A saccharide composition comprising MT** | 6.08 | 1.68 | 27.6 |
| 6 | Maltitol | 6.12 | 1.73 | 28.3 |
| 7 | Maltohexaose | 6.03 | 1.86 | 30.8 |
| 8 | α-Cyclodextrin | 6.06 | 1.82 | 30.0 |

*: without saccharide-permeating treatment
**: Maltosyltrehalose

Table 2

| No. | Dried cabbage comprising saccharide | Rehydrating property (The amount of absorbed water) (ml/g) | Score (Upper stand: Dried cabbage) (Lower stand: Cabbage after rehydration) | | | | Hygroscopicity (Weight increase) (%) |
|---|---|---|---|---|---|---|---|
| | | | Shape | Color | Relish | Total | |
| 1 | Control (No treatment*) | 8.6 | 3.0 | 3.0 | 3.0 | 9.0 | 15.5 |
| | | | 3.0 | 3.0 | 3.0 | 9.0 | |

(continued)

| No. | Dried cabbage comprising saccharide | Rehydrating property (The amount of absorbed water) (ml/g) | Score (Upper stand: Dried cabbage) (Lower stand: Cabbage after rehydration) | | | | Hygroscopicity (Weight increase) (%) |
|---|---|---|---|---|---|---|---|
| | | | Shape | Color | Relish | Total | |
| 2 | Glucose | 11.9 | 4.1 | 2.9 | 4.0 | 11.0 | 17.3 |
| | | | 4.2 | 3.0 | 3.8 | 11.0 | |
| 3 | Maltose | 12.1 | 4.5 | 3.9 | 4.2 | 12.6 | 15.0 |
| | | | 4.3 | 4.0 | 3.9 | 12.2 | |
| 4 | Trehalose | 12.4 | 4.8 | 5.0 | 4.9 | 14.7 | 12.1 |
| | | | 4.9 | 5.0 | 5.1 | 15.0 | |
| 5 | A saccharide composition comprising MT** | 12.2 | 4.8 | 4.6 | 4.8 | 14.2 | 12.8 |
| | | | 4.8 | 4.8 | 4.9 | 14.5 | |
| 6 | Maltitol | 12.4 | 4.5 | 4.4 | 4.3 | 13.2 | 19.6 |
| | | | 4.6 | 4.3 | 4.3 | 13.2 | |
| 7 | Maltohexaose | 11.7 | 4.0 | 3.7 | 3.8 | 11.5 | 14.4 |
| | | | 4.1 | 3.6 | 3.7 | 11.4 | |
| 8 | α-cyclodextrin | 11.4 | 4.1 | 4.3 | 3.8 | 12.2 | 13.7 |
| | | | 4.3 | 4.0 | 3.9 | 12.2 | |
| *: without saccharide-permeating treatment **: Maltosyltrehalose | | | | | | | |

As is evident from Table 1, in the dried cabbage prepared by the saccharide-permeating treatment, the percentage of the dry weight of residue obtained by extracting the dried cabbage comprising saccharide with 60% ethanol, to the weight of the dried cabbage comprising saccharide were about 25.2 to 30.8% without relation to the kinds of saccharides. From the results in Table 2, the dried cabbage comprising saccharide, No.2 to 8, showed good rehydrating property, *i.e.*, relatively high amount of absorbed water, 11 ml/g or higher, than 8.6 ml/g, that of the control (No. 1) prepared without the saccharide-permeating treatment when the dried cabbage was rehydrated with hot water, and good evaluation results. Comparing the results among the saccharides, the dried cabbage prepared by using trehalose (No. 4) showed the highest value in all evaluation items; and the dried cabbage prepared by using a saccharide comprising maltosyltrehalose (No.5) was the second. The dried cabbage prepared by using glucose (No.2) showed a slight discoloration and inferior shape and relish. Although the dried cabbage prepared by using maltose (No.3) was inferior than those prepared by using trehalose or a saccharide comprising maltosyltrehalose (No.4 and 5), it showed higher values in the evaluation items than that prepared by using glucose (No.2). Those prepared by using maltohexaose (No.7) and α-cyclodextrin (No.8) were slightly inferior in color and relish than No.4 and 5, described above. Although the dried cabbage prepared by using maltitol (No.6) showed good rehydrating property and evaluation results, it showed a defect of being easily absorbed moisture in the hygroscopicity test.

From the above results, it is revealed that the dried cabbage prepared using the saccharide-permeating treatment has a higher quality than that prepared without the treatment. Particularly, it is revealed that the dried cabbage prepared by treating with trehalose and a saccharide comprising a saccharide-derivative of trehalose show good results on every evaluation items and high quality in both cases of the dried vegetable (cabbage) per se and the product after rehydrating the dried vegetable with hot water.

Experiment 2

Effect of the percentage of dry weight of residue, obtained by extracting dried vegetable comprising saccharide with 60% ethanol, to the weight of the dried vegetable on a quality of dried vegetable comprising saccharide (Case of a leaf vegetable)

A dried cabbage comprising saccharide was prepared by the same method in Experiment 1 except for using trehalose as a saccharide and for setting concentrations of the trehalose aqueous solution for the saccharide-permeating treatment to 5, 7.5, 10, 15, 20, 25, or 30% (w/w). The results of measuring the percentage of the dry weight of residue obtained by extracting the dried cabbage comprising saccharide with 60% ethanol to the weight of the dried cabbage comprising saccharide and specific gravities of the dried cabbage measured by conventional method are in Table 3. The results of investigating about the evaluation items are in Table 4. As in the case of Experiment 1, a dried cabbage prepared by the same method without the saccharide-permeating treatment was used as a control.

Table 3

| No. | Conc.* of trehalose aqueous solution (w/w %) | The weight of test sample (g) (A) | The weight of residue after extraction (g) (B) | (B/A) × 100 (%) | Specific gravity |
|---|---|---|---|---|---|
| 1 | Control | 6.02 | 2.92 | 48.5 | 0.93 |
| 2 | 5 | 6.10 | 2.43 | 39.8 | 0.99 |
| 3 | 7.5 | 6.06 | 2.08 | 34.3 | 1.04 |
| 4 | 10 | 6.08 | 1.94 | 31.9 | 1.08 |
| 5 | 15 | 6.03 | 1.60 | 26.5 | 1.15 |
| 6 | 20 | 6.12 | 1.21 | 19.8 | 1.19 |
| 7 | 25 | 6.05 | 0.92 | 15.2 | 1.23 |
| 8 | 30 | 6.07 | 0.77 | 12.7 | 1.26 |
| *: Concentration | | | | | |

Table4

| No. | (B/A) × 100 (%) | Specific gravity | Rehydrating property (The amount of absorbed water) (ml/g) | Score (Upper stand: Dried cabbage) (Lower stand: Cabbage after rehydration) | | | |
|---|---|---|---|---|---|---|---|
| | | | | Shape | Color | Relish | Total |
| 1 | 48.5 | 0.93 | 8.6 | 3.0 | 3.0 | 3.0 | 9.0 |
| | | | | 3.0 | 3.0 | 3.0 | 9.0 |
| 2 | 39.8 | 0.99 | 9.9 | 3.7 | 4.1 | 3.5 | 11.3 |
| | | | | 3.6 | 4.0 | 3.6 | 11.2 |
| 3 | 34.3 | 1.04 | 11.2 | 4.5 | 4.6 | 4.6 | 13.7 |
| | | | | 4.5 | 4.7 | 4.7 | 13.9 |
| 4 | 31.9 | 1.08 | 11.4 | 4.7 | 4.6 | 4.6 | 13.9 |
| | | | | 4.8 | 4.7 | 4.8 | 14.3 |
| 5 | 26.5 | 1.15 | 12.4 | 4.8 | 4.8 | 4.8 | 14.4 |
| | | | | 4.9 | 5.0 | 5.1 | 15.0 |
| 6 | 19.8 | 1.19 | 12.6 | 4.8 | 4.7 | 4.8 | 14.3 |
| | | | | 4.8 | 4.7 | 4.9 | 14.4 |

(continued)

| No. | (B/A) × 100 (%) | Specific gravity | Rehydrating property (The amount of absorbed water) (ml/g) | Score (Upper stand: Dried cabbage) (Lower stand: Cabbage after rehydration) | | | |
|---|---|---|---|---|---|---|---|
| | | | | Shape | Color | Relish | Total |
| 7 | 15.2 | 1.23 | 12.6 | 4.6 | 4.6 | 4.4 | 13.6 |
| | | | | 4.6 | 4.6 | 4.6 | 13.8 |
| 8 | 12.7 | 1.26 | 12.6 | 4.1 | 4.6 | 2.8 | 11.5 |
| | | | | 4.0 | 4.5 | 2.6 | 11.1 |

As is evident from Table 3, seven kinds of dried cabbage comprising saccharide, showing the percentage of the dry weight of residue obtained by extracting the dried cabbage comprising saccharide with 60% ethanol to the weight of the dried cabbage comprising saccharide of 12.7 to 39.8% and the specific gravities of 0.99 to 1.26, were obtained. As is evident from the results in Table 4, the dried cabbage comprising saccharide of No.3 to 8, which showed the percentage of the dry weight of residue obtained by extracting the dried cabbage comprising saccharide with 60% ethanol to the weight of the dried cabbage comprising saccharide of lower than 35%, showed good rehydrating property (the amount of absorbed water), 11 ml/g or higher, than that of control (No.1), 8.6 ml/g; and good evaluation results in shape, color, and relish. Particularly, the dried cabbage comprising saccharide of No.3 to 7, prepared by permeating trehalose under the saccharide concentrations of 7.5 to 25% (w/w), showed the percentage of the dry weight of residue obtained by extracting the dried cabbage comprising saccharide with 60% ethanol to the weight of the dried cabbage comprising saccharide of 15% or higher but lower than 35%, and good rehydrating property and sensory evaluation results. Although the dried cabbage comprising saccharide of No.2 with the percentage of 35% or higher showed slightly good evaluation results in comparison with the control, it shows slightly inferior rehydrating property of being the amount of absorbed water was only 9.9 ml/g and inferior evaluation results in all items in comparison with those of the dried cabbage with the percentage of 15% or higher but less than 35%. Further, although the dried cabbage comprising saccharide of No. 8 with the percentage of 12.7% showed good rehydrating property and color, it showed inferior results in shape and relish because a slight amount of trehalose was crystallized on the surface.
From the viewpoint of specific gravity, the specific gravities of the dried cabbage comprising saccharide of No. 3 to 7, which were evaluated as "preferable" above, were 1.04 to 1.23. The values were higher than 1.0 and increased by 0.1 or higher from that of the control dried cabbage prepared without the saccharide-permeating treatment, 0.93.

Experiment 3

Effect of the percentage of dry weight of residue, obtained by extracting dried vegetable comprising saccharide, to the weight of the dried vegetable on a quality of dried vegetable comprising saccharide (Case of a root vegetable)

Commercially available carrots were rinsed in water, peeled and then sliced into about 2 mm-thickness using a professional use-manual slicer ("V-SLICER MV-50", commercialized by Shinkousha, Saitama, Japan). A dried carrot comprising saccharide was prepared by the same method in Experiment 2 except for using the sliced carrot as a vegetable and for setting the blanching time and saccharide-permeating time to 10 and 30 min, respectively, and the product was evaluated. The results of measuring the percentage of the dry weight of residue obtained by extracting the dried carrot comprising saccharide with 60% ethanol to the weight of the dried carrot comprising saccharide and specific gravities of the dried carrot measured by conventional method are in Table 5. The results of investigating about the evaluation items are in Table 6. As in the case of Experiment 2, a dried carrot prepared by the same method without the saccharide-permeating treatment was used as a control.

Table 5

| No. | Conc.* of trehalose aqueous solution (w/w %) | The weight of test sample (g) (A) | The weight of residue after extraction (g) (B) | (B/A) × 100 (%) | Specific gravity |
|---|---|---|---|---|---|
| 1 | Control | 6.06 | 3.30 | 54.5 | 1.23 |
| 2 | 5 | 6.03 | 2.49 | 41.3 | 1.38 |

(continued)

| No. | Conc.* of trehalose aqueous solution (w/w %) | The weight of test sample (g) (A) | The weight of residue after extraction (g) (B) | (B/A) × 100 (%) | Specific gravity |
|---|---|---|---|---|---|
| 3 | 7.5 | 6.08 | 2.08 | 34.2 | 1.41 |
| 4 | 10 | 6.14 | 1.62 | 26.4 | 1.40 |
| 5 | 15 | 6.01 | 1.19 | 19.8 | 1.43 |
| 6 | 20 | 6.04 | 0.99 | 16.4 | 1.44 |
| 7 | 25 | 6.10 | 0.92 | 15.1 | 1.46 |
| 8 | 30 | 6.03 | 0.88 | 14.6 | 1.48 |

*: Concentration

Table6

| No. | (B/A) × 100 (%) | Specific gravity | Rehydrating property (The amount of absorbed water) (ml/g) | Score (Upper stand: Dried carrot) (Lower stand: Carrot after rehydration) | | | |
|---|---|---|---|---|---|---|---|
| | | | | Shape | Color | Relish | Total |
| 1 | 54.5 | 1.23 | 6.7 | 3.0 | 3.0 | 3.0 | 9.0 |
| | | | | 3.0 | 3.0 | 3.0 | 9.0 |
| 2 | 41.3 | 1.38 | 7.8 | 3.6 | 4.0 | 3.5 | 11.1 |
| | | | | 3.6 | 3.8 | 3.4 | 10.8 |
| 3 | 34.2 | 1.41 | 9.1 | 4.6 | 4.6 | 4.6 | 13.8 |
| | | | | 4.6 | 4.7 | 4.7 | 14.0 |
| 4 | 26.4 | 1.40 | 9.4 | 4.6 | 4.8 | 4.6 | 14.0 |
| | | | | 4.7 | 4.9 | 4.8 | 14.4 |
| 5 | 19.8 | 1.43 | 10.3 | 4.8 | 4.8 | 4.9 | 14.5 |
| | | | | 4.9 | 5.0 | 5.0 | 14.9 |
| 6 | 16.4 | 1.44 | 10.9 | 4.8 | 4.7 | 4.8 | 14.3 |
| | | | | 4.7 | 4.8 | 4.9 | 14.4 |
| 7 | 15.1 | 1.46 | 10.3 | 4.8 | 4.6 | 4.4 | 13.8 |
| | | | | 4.8 | 4.6 | 4.5 | 13.9 |
| 8 | 14.6 | 1.48 | 10.5 | 4.2 | 4.6 | 2.5 | 11.3 |
| | | | | 4.0 | 4.4 | 2.7 | 11.1 |

As is evident from Table5, seven kinds of dried carrot comprising saccharide, showing the percentage of the dry weight of residue obtained by extracting the dried carrot comprising saccharide with 60% ethanol to the weight of the dried carrot comprising saccharide of 14.6 to 41.3% and the specific gravities of 1.38 to 1.48, were obtained. As is evident from the results in Table 6, the dried carrot comprising saccharide of No. 3 to 7, which showed the percentage of the dry weight of residue obtained by extracting the dried carrot comprising saccharide with 60% ethanol to the weight of the dried carrot comprising saccharide of 15% or higher but lower than 35%, showed good rehydrating property (the amount of absorbed water), 9 ml/g or higher, than that of control (No.1), 6.7 ml/g; and good evaluation results in shape, color, and relish, in both cases of the dried carrot comprising saccharide and the carrot rehydrated with hot water. Particularly, the dried carrot comprising saccharide of No.4 to 6, prepared by permeating trehalose under the saccharide concentrations of 10 to 20% (w/w), showed good rehydrating property and good results in every evaluation items.

Although the dried carrot comprising saccharide of No.2 with the percentage of 40% or higher showed slightly good evaluation results in comparison with the control, it showed inferior rehydrating property of being the amount of absorbed water was only 7.9 ml/g and inferior evaluation results in all items in comparison with those of the dried carrot with the percentage of 15% or higher but less than 35%. Further, the dried carrot comprising saccharide of No.8 with the percentage of 14.6% showed inferior results in relish because it has a high saccharide content and a slight amount of saccharide was crystallized on the surface.

From the viewpoint of specific gravity, in the case of carrot, different from the case of cabbage in Experiment 2, the specific gravity of the control dried carrot, prepared without the saccharide-permeating treatment, was 1.23 and the value was higher than 1.0. However, the specific gravities of the dried carrot comprising saccharide of No.3 to 7, which were evaluated as "preferable" by the above, were 1.41 to 1.46. The values were increased by 0.1 or higher from that of the control dried carrot prepared without the saccharide-permeating treatment.

Considering the results in Experiment 2 and 3, it is revealed that the dried vegetable showing the following physical properties has a good rehydrating property and good shape, color, and relish in both cases of the dried vegetable per se and the product after rehydrating the dried vegetable with hot water:

(1) The dry weight of residue obtained by extracting the dried vegetable comprising saccharide with 60% ethanol accounts for 15 or higher but less than to 35%, to the weight of the dried vegetable comprising saccharide; and
(2) The specific gravity of the dried vegetable comprising saccharide is increased by 0.1 or higher from that of a dried vegetable prepared without the saccharide-permeating treatment, and is higher than 1.0 but lower than 1.5, preferably, 1.04 or higher but 1.46 or lower. It is also revealed that the dried vegetable comprising saccharide is preferable as a material of instant foods, retort foods, and side dishes.

The following examples further explain the present invention in detail. However, the present invention is not restricted by them.

Example 1

Dried cabbage comprising saccharide

Cabbages were rinsed in water, cored, and then cut into square with about 10 mm on a side. Three hundred parts by weight of the cut cabbage was blanched by steaming at 100°C for 30 sec and then soaked into 900 parts by weight of a saccharide aqueous solution (DE: about zero) which comprises 15% (w/w) of a hydrous crystalline trehalose ("TREHA®", commercialized by Hayashibara Shoji Inc., Okayama, Japan), on a dry slid basis, at 70 °C for 10 min for permeating the saccharide into the cut cabbage. After drained off using a spin-dryer, the cut cabbage permeated with the saccharide was spread on a tray and dried using a homeothermal blowing dryer equipped with shelf at 55°C for 20 hours to make into dried cabbage comprising saccharide. The percentage of the dry weight of residue obtained by extracting the product with 60% ethanol to the weight of the product was 24.1% and the specific gravity of the product was 1.34. The product keeps favorable greenish yellow of cabbage and has low hygroscopicity and no fear of deterioration with time. Further, the product shows good rehydrating property and relish, and is not too hard. Furthermore, the product keeps its shape, color and relish even when allowing it to rehydrate with hot water. Therefore, the product can be advantageously used as an ingredient of instant foods and retort foods, and as a material of side dishes. In comparison with the product, the percentage of the dry weight of residue obtained by extracting a dried cabbage, which was prepared without the saccharide-permeating treatment, with 60% ethanol to the weight of the dried cabbage was 48.5% and the specific gravity of the dried cabbage was 0.91.

Example 2

Dried green onion comprising saccharide

Green onions were rinsed in water and then cut to about 10 mm length. Three hundred parts by weight of the cut green onion was blanched by steaming at 100°C for 15 sec and then soaked into 900 parts by weight of a saccharide aqueous solution (DE: about 25) which comprises 5% (w/w) of a hydrous crystalline trehalose ("TREHA®", commercialized by Hayashibara Shoji Inc., Okayama, Japan) and 5%(w/w) of a maltose product ("SUNMALT®", commercialized by Hayashibara Shoji Inc., Okayama, Japan), on a dry slid basis, at 45°C for 3 min under reduced pressure (500 mmHg) for permeating the saccharides into the cut green onion. After drained off using a spin-dryer, the cut green onion permeated with the saccharides was spread on a tray and dried using a homeothermal blowing dryer equipped with shelf at 65°C for 20 hours to make into dried green onion comprising saccharide. The percentage of the dry weight of residue obtained by extracting the product with 60% ethanol to the weight of the product was 24.9% and the specific gravity of the product was 1.09. The product keeps favorable green color of green onion and has low hygroscopicity and no fear of deterioration with time. Further, the product shows good rehydrating property and relish, and is not too hard. Furthermore, the product keeps its shape, color and relish even when allowing it to rehydrate with hot water. Therefore, the product can be advantageously used as an ingredient of instant foods and retort foods, and as a material of side dishes. In comparison with the product, the percentage of the dry weight of residue obtained by extracting a dried green onion, which was prepared without the saccharide-permeating treatment, with 60% ethanol to the weight of the dried green onion was 40.1% and the specific gravity of the dried green onion was 0.89.

Example 3

Dried onion comprising saccharide

Onions were rinsed in water, pelt and then sliced into about 3 mm thickness. Two hundred parts by weight of the sliced onion was blanched by soaking into 3000 parts by weight of hot water at 95°C for 3 min and then soaked into 900 parts by weight of a saccharide aqueous solution (DE: about zero) which comprises 15% (w/w) of a hydrous crystalline trehalose ("TREHA®", commercialized by Hayashibara Shoji Inc., Okayama, Japan), on a dry slid basis, at 60°C for 10 min for permeating the saccharide into the sliced onion. After drained off using a spin-dryer, the sliced onion permeated with the saccharide was spread on a tray and dried using a homeothermal blowing dryer equipped with shelf at 55°C for 20 hours to make into dried onion comprising saccharide. The percentage of the dry weight of residue obtained by extracting the product with 60% ethanol to the weight of the product was 22.7% and the specific gravity of the product was 1.22. The product keeps favorable white color of onion and has low hygroscopicity and no fear of deterioration with time. Further, the product shows good rehydrating property and relish, and is not too hard. Furthermore, the product keeps its shape, color and relish even when allowing it to rehydrate with hot water. Therefore, the product can be advantageously used as an ingredient of instant foods and retort foods, and as a material of side dishes. In comparison with the product, the percentage of the dry weight of residue obtained by extracting a dried green onion, which was prepared without the saccharide-permeating treatment, with 60% ethanol to the weight of the dried onion was 41.2% and the specific gravity of the dried onion was 0.94.

Example 4

Dried spinach comprising saccharide

Spinaches were rinsed in water and then cut into about 30 mm length. One hundred-fifty parts by weight of the cut spinach was blanched by soaking into 4000 parts by weight of hot water at 95°C for 1 min and then soaked into 900 parts by weight of a saccharide aqueous solution (DE: about 14) which comprises 10% (w/w) of a syrup comprising maltosyltrehalose ("HALLODEX®", commercialized by Hayashibara Shoji Inc., Okayama, Japan), on a dry slid basis, at 60°C for 5 min for permeating the saccharides into the cut spinach. After drained off using a spin-dryer, the cut spinach permeated with the saccharides was spread on a tray and dried using a homeothermal circulation dryer equipped with shelf at 60°C for 16 hours to make into dried spinach comprising saccharide. The percentage of the dry weight of residue obtained by extracting the product with 60% ethanol to the weight of the product was 24.1% and the specific gravity of the product was 1.30. The product keeps favorable green color of spinach and has low hygroscopicity and no fear of deterioration with time. Further, the product shows good rehydrating property and relish, and is not too hard. Furthermore, the product keeps its shape, color and relish even when allowing it to rehydrate with hot water. Therefore, the product can be advantageously used as an ingredient of instant foods and retort foods, and as a material of side dishes. In comparison with the product, the percentage of the dry weight of residue obtained by extracting a dried spinach, which was prepared without the saccharide-permeating treatment, with 60% ethanol to the weight of the dried spinach was 40.5% and the specific gravity of the dried onion was 0.90.

Example 5

Dried bean sprout comprising saccharide

Been sprouts were rinsed in water and then removed their roots. One hundred-fifty parts by weight of the been sprout was blanched by soaking into 4,000 parts by weight of hot water at 95°C for 2 min and then soaked into 900 parts by weight of a saccharide aqueous solution (DE: about 5) which comprises 10% (w/w) of commercially available trehalose ("TREHA®", commercialized by Hayashibara Shoji Inc., Okayama, Japan) and 5% (w/w) of a syrup comprising maltosyltrehalose ("HALLODEX®", commercialized by Hayashibara Shoji Inc., Okayama, Japan), on a dry slid basis, at 55°C for 5 min under reduced pressure (600 mmHg) for permeating the saccharides into the been sprout. After drained off using a spin-dryer, the been sprout permeated with the saccharides was spread on a tray and dried using a homeothermal circulation dryer equipped with shelf at 70°C for 16 hours to make into dried been sprout comprising saccharide. The percentage of the dry weight of residue obtained by extracting the product with 60% ethanol to the weight of the product was 25.4% and the specific gravity of the product was 1.31. The product keeps favorable white color of been sprout and has low hygroscopicity and no fear of deterioration. Further, the product shows good rehydrating property and relish, and is not too hard. Furthermore, the product keeps its shape, color and relish even when allowing it to rehydrate with hot water. Therefore, the product can be advantageously used as an ingredient of instant foods and retort foods, and as a material of side dishes. In comparison with the product, the percentage of the dry weight of residue obtained by extracting a dried been sprout, which was prepared without the saccharide-permeating treatment, with 60% ethanol to the weight of the dried been sprout was 42.6% and the specific gravity of the dried green onion was 0.94.

Example 6

Dried carrot comprising saccharide

Carrots were rinsed in water, removed green stem, and then sliced into about 3 mm thickness. Three hundred parts by weight of the sliced carrot was blanched by soaking into 4,000 part by weight of hot water at 95°C for 10 min and then soaked into 900 parts by weight of a saccharide aqueous solution (DE: about zero) which comprises 15% (w/w) of a hydrous crystalline trehalose ("TREHA®", commercialized by Hayashibara Shoji Inc., Okayama, Japan), on a dry slid basis, at 80 °C for 30 min for permeating the saccharide into the sliced carrot. After drained off using a spin-dryer, the sliced carrot permeated with the saccharide was spread on a tray and dried using a homeothermal circulation dryer equipped with shelf at 70 °C for 24 hours to make into dried carrot comprising saccharide. The percentage of the dry weight of residue obtained by extracting the product with 60% ethanol to the weight of the product was 19.5% and the specific gravity of the product was 1.37. The product keeps favorable red color of carrot and has low hygroscopicity and no fear of deterioration with time. Further, the product shows good rehydrating property and relish, and is not too hard. Furthermore, the product keeps its shape, color and relish even when allowing it to rehydrate with hot water. Therefore, the product can be advantageously used as an ingredient of instant foods and retort foods, and as a material of side dishes. In comparison with the product, the percentage of the dry weight of residue obtained by extracting a dried carrot, which was prepared without the saccharide-permeating treatment, with 60% ethanol to the weight of the dried carrot was 54.8% and the specific gravity of the dried carrot was 1.22.

Example 7

Dried burdock comprising saccharide

Burdocks were rinsed in water and then cut into about 5 mm thickness. Three hundred parts by weight of the cut burdock was blanched by soaking into 4, 000 part by weight of hot water at 96°C for 10 min and then soaked into 600 parts by weight of a saccharide aqueous solution (DE: about 14) which comprises 15% (w/w) of a syrup comprising maltosyltrehalose ("HALLODEX®", commercialized by Hayashibara Shoji Inc., Okayama, Japan), on a dry slid basis, at 80 °C for 20 min for permeating the saccharides into the cutburdock. After drained off using a spin-dryer, the cut burdock permeated with the saccharides was spread on a tray and dried using a homeothermal circulation dryer equipped with shelf at 65°C for 12 hours to make into dried burdock comprising saccharide. The percentage of the dry weight of residue obtained by extracting the product with 60% ethanol to the weight of the product was 23.5% and the specific gravity of the product was 1.11. The product keeps favorable gray color of burdock and has low hygroscopicity and no fear of deterioration with time. Further, the product shows good rehydrating property and relish, and is not too hard. Furthermore, the product keeps its shape, color and relish even when allowing it to rehydrate with hot water. Therefore, the product can be advantageously used as an ingredient of instant foods and retort foods, and as a material of side dishes. In comparison with the product, the percentage of the dry weight of residue obtained by extracting a dried burdock, which was prepared without the saccharide-permeating treatment, with 60% ethanol to the weight of the dried burdock was 70.5% and the specific gravity of the dried carrot was 0.22.

Example 8

Dried radish comprising saccharide

Radishes were rinsed in water and then cut into about 2 mm × 3 mm × 40 mm. Three hundred parts by weight of the cut radish was blanched by soaking into 4,000 part by weight of hot water at 95°C for 5 min and then soaked into 6,000 parts by weight of a saccharide aqueous solution (DE: about zero) which comprises 15% (w/w) of a hydrous crystalline trehalose ("TREHA®", commercialized by Hayashibara Shoji Inc., Okayama, Japan), on a dry slid basis, at 80 °C for 20 min for permeating the saccharide into the cut radish. After drained off using a spin-dryer, the cut radish permeated with the saccharide was spread on a tray and dried using a homeothermal circulation dryer equipped with shelf at 55°C for 16 hours to make into dried radish comprising saccharide. The percentage of the dry weight of residue obtained by extracting the product with 60% ethanol to the weight of the product was 34.2% and the specific gravity of the product was 1.19. The product keeps favorable white color of radish and has low hygroscopicity and no fear of deterioration. Further, the product shows good rehydratingcircu property and relish, and is not too hard. Furthermore, the product keeps its shape, color and relish even when allowing it to rehydrate with hot water. Therefore, the product can be advantageously used as an ingredient of instant foods and retort foods, and as a material of side dishes. In comparison with the product, the percentage of the dry weight of residue obtained by extracting a dried radish, which was prepared without the saccharide-permeating treatment, with 60% ethanol to the weight of the dried radish was 41.4% and the specific gravity of the dried carrot was 1.29.

Example 9

Production of dried vegetable comprising saccharide using a hot air dryer with multiunit belt conveyer system

Vegetables, prepared by permeating saccharides according to the same methods, i.e., blanched, permeated with saccharides, and then drained off, in Examples 1 to 8; were dried using a ventilated 3-step band dryer (a hot air dryer with multiunit belt conveyer system, commercialized by Kumeta Seisakusho, Shizuoka, Japan) at 80°C to make into dried vegetables comprising saccharide. By the drying method, each saccharide-permeated vegetables was made into dried vegetable comprising saccharide in a high quality in relatively short times, about 0.5 to 3 hours. The drying method can be advantageously used for efficiently producing dried vegetables comprising saccharide in high quality in large scale.

Example 10

Instant "*miso*" soup packed in a cup

Dried vegetables in a commercial instant "*miso*" soup packed in a cup were removed. Then, dried burdock comprising saccharide, prepared according to the method in Example 7 , and dried radish comprising saccharide, prepared according to the method in Example 8, were added to the cup to give adequate amounts to make into an instant "*miso*" soup. A "*miso*" soup, comprising vegetables with good inherent color, texture and relish, can be prepared by rehydrating the above product with hot water.

Example 11

Instant Chinese noodle packed in a cup

Dried vegetables in a commercial instant Chinese noodle packed in a cup were removed. Then, dried green onion comprising saccharide, prepared according to the method in Example 2, and dried been sprout comprising saccharide, prepared according to the method in Example 5, were added to the cup to give adequate amounts to make into an instant Chinese noodle. A Chinese noodle, comprising vegetables with good inherent color, texture and relish, can be prepared by rehydrating the above product with hot water.

Example 12

Instant fried Chinese noodle packed in a cup

Dried vegetables in a commercial instant fried Chinese noodle packed in a cup were removed. Then, dried cabbage comprising saccharide, dried onion comprising saccharide, and dried carrot comprising saccharide, prepared according to the method in Example 9, were added to the cup to give adequate amounts to make into an instant fried Chinese noodle. A fried Chinese noodle, comprising vegetables with good inherent color, texture and relish, can be prepared by rehydrating the above product with hot water.

Example 13

Instant side dish in Japanese-style

Dried carrot comprising saccharide, dried burdock comprising saccharide, and dried radish comprising saccharide, prepared according to the method in Example 9, were packed in a container to make into an instant side dish in Japanese-style. "*Ohira*", a cooked side dish in Japanese-style, can be prepared by rehydrating the product using a flavor-enhancing seasoning solution comprising soup of "*shiitake*" mushroom and sea tangle.

## INDUSTRIAL APPLICABILITY

As is evident from above description, according to the present invention, a dried vegetable comprising saccharide, which shows preferable rehydrating property and good shape, color, and relish when rehydrated with hot water, with a stable quality can be produced relatively easily in a low cost; by the steps of cutting fresh vegetable into small pieces; blanching the cut vegetable in a hot aqueous solution for relatively short times; permeating a relatively small amount of saccharide(s) into the blanched vegetable by soaking the vegetable into an aqueous solution comprising the saccharide(s), particularly, a specific saccharide(s); and successive removing of solution from the vegetable and drying in a hot air. The present invention establishes a process for producing a novel dried vegetable comprising saccharide and enables us to use the dried vegetable comprising saccharide in an industrial scale as a material for instant foods, side dishes, confectionaries, and breads. The present invention is a significantly important invention that greatly contributes to the field of food industry.

## Claims

1.  A dried vegetable comprising saccharide(s), which is obtained by permeating a saccharide (s) into a vegetable and drying with hot air, and said dried vegetable comprising saccharide(s) shows the following physical properties of (1) and (2):

    (1) A dry weight of residue which is obtained by extracting said dried vegetable comprising saccharide (s) with 60% (v/v) ethanol accounts for 15% or higher but lower than 35% of the weight of said dried vegetable comprising saccharide(s); and
    (2) The specific gravity of said dried vegetable comprising saccharide(s) is increased by 0.1 or higher from that of a dried vegetable prepared without permeating the saccharide(s), and is higher than 1.0 but lower than 1.5.

2.  The dried vegetable comprising saccharide(s) of claim 1, wherein said saccharide comprises $\alpha,\alpha$-trehalose and/or saccharide derivatives of $\alpha,\alpha$-trehalose.

3.  The dried vegetable comprising saccharide(s) of claim 1 or 2, wherein said vegetable is leaf vegetable, root vegetable, flower vegetable, or fruit vegetable.

4.  A process for producing the dried vegetable comprising saccharide (s) of any one of claim 1 to 3, which comprises the following steps (a) to (d):

    (a) blanching a material vegetable;
    (b) permeating a saccharide(s) into the blanched vegetable obtained in the step (a) by soaking the blanched vegetable into an aqueous solution comprising the saccharide(s);
    (c) draining off the vegetable permeated with the saccharide(s) obtained in the step (b); and
    (d) drying the drained-off vegetable obtained in the step (c).

5.  The process of claim 4, wherein said blanching in the step (a) is carried out in an aqueous solution at a temperature of higher than 90°C for 10 seconds to 20 minutes.

6.  The process of claim 4 or 5, wherein said permeating a sacchride(s) in the step (b) is carried out by soaking the blanched vegetable into an aqueous solution comprising the saccharide(s) at a temperature of lower than the blanching temperature but 40°C or higher for 2 to 30 minutes.

7.  The process of any one of claims 4 to 6, wherein said permeating a sacchride (s) in the step (b) is carried out using a saccharide aqueous solution with a concentration of 7.5 to 25% (w/w).

8. The process of any one of claims 4 to 7, wherein said draining off in the step (c) is carried out using a spin-dryer.

9. The process of any one of claims 4 to 8, wherein said drying in the step (d) is carried out using a hot-air dryer with multiunit belt conveyer system.

10. The process of any one of claims 4 to 9, wherein said material vegetable comprises starch.

11. An instant food, produced by using the dried vegetable comprising saccharide (s) of any one of claims 1 to 3, or prepared by the process of any one of claims 4 to 10.

## INTERNATIONAL SEARCH REPORT

| International application No. |
|---|
| PCT/JP2007/072432 |

**A. CLASSIFICATION OF SUBJECT MATTER**
*A23L1/212*(2006.01)i, *A23B7/02*(2006.01)i

According to International Patent Classification (IPC) or to both national classification and IPC

**B. FIELDS SEARCHED**

Minimum documentation searched (classification system followed by classification symbols)
A23L1/212-1/218, A23B7/02

Documentation searched other than minimum documentation to the extent that such documents are included in the fields searched

Electronic data base consulted during the international search (name of data base and, where practicable, search terms used)
JST7580/JSTPlus(JDream2), G-Search

**C. DOCUMENTS CONSIDERED TO BE RELEVANT**

| Category* | Citation of document, with indication, where appropriate, of the relevant passages | Relevant to claim No. |
|---|---|---|
| X | Shoji MIWA, "Shikicho Oyobi Kyusuisei no Yoi Keijo o Nokosu Kanso Sansai no Kako Gijutsu", Ishikawa-Ken Norin Suisan Kenkyu Seika Shuho, 2001 Nen 3 Gatsu, No.3, pages 38 to 39 | 1-11 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 December, 2007 (11.12.07) | 25 December, 2007 (25.12.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3008188 B
- JP 2000050817 A
- JP 3817602 B
- JP 7170977 A
- JP 7213283 A

**Non-patent literature cited in the description**

- Shokuhin Tenkabutsu Kotei-sho Kaisetsu-sho. Hirokawa Shoten, 1992